# EUROPÄISCHE PATENTANMELDUNG

(11) **EP 4 249 359 A1**
(43) Veröffentlichungstag der Anmeldung: **27.09.2023**
(21) Anmeldenummer: 23163107.8
(22) Anmeldetag: 21.03.2023
(51) Int. Cl.: B62K 23/06, B62L 3/02

(54) **GEBERVORRICHTUNG FÜR EINE HYDRAULISCHE BREMSE LENKERGEFÜHRTER FAHRZEUGE UND HYDRAULISCHE BREMSE FÜR EIN LENKERGEFÜHRTES FAHRZEUG**

(30) Priorität: 21.03.2022 DE 102022202766
(71) Anmelder: Gustav Magenwirth GmbH & Co. KG, 72574 Bad Urach (DE)
(72) Erfinder: KOLLER, Florian, 87497 Wertach (DE)
(74) Vertreter: Friese Goeden Patentanwälte PartGmbB

(57) **Zusammenfassung**

Die Erfindung betrifft eine Gebervorrichtung (1) für eine hydraulische Bremse lenkergeführter Fahrzeuge mit einem Druckraum (5), in dem bei Betätigung der Gebervorrichtung Druck aufgebaut wird, und mit einem Hydraulikanschluss (6), in dem eine Hydraulikleitungsanschlusseinrichtung (10) angeordnet ist, wobei die Hydraulikleitungsanschlusseinrichtung (10) derart ausgebildet und angeordnet ist, dass eine Hydraulikleitung (50) darin derart anordbar ist, dass der Hydraulikanschluss (6) von dem Druckraum (5) hydraulisch getrennt ist, wenn die Hydraulikleitung (50) nicht in der Hydraulikleitungsanschlusseinrichtung (10) angeordnet ist, und der Hydraulikanschluss (6) mit dem Druckraum (5) hydraulisch verbunden ist, wenn die Hydraulikleitung (50) in der Hydraulikleitungsanschlusseinrichtung (10) angeordnet ist, wobei um die Hydraulikleitungsanschlusseinrichtung (10) eine Abdeckeinrichtung (20) angeordnet ist, die eine Verschlusseinrichtung (30) aufweist.

## Beschreibung

Die Erfindung betrifft eine Gebervorrichtung für eine hydraulische Bremse lenkergeführter Fahrzeuge, insbesondere für eine hydraulische Fahrradbremse, weiter insbesondere für eine hydraulische Scheibenbremse und/oder hydraulische Felgenbremse, und eine hydraulische Bremse für ein lenkergeführtes Fahrzeug, insbesondere für ein Fahrrad, gemäß den Oberbegriffen der unabhängigen Ansprüche.

Hydraulische Bremsen lenkergeführter Fahrzeuge weisen üblicherweise eine an einem Lenker montierte Geberarmatur auf, an der eine Hydraulikleitung angeschlossen ist, die zu einer Nehmerarmatur führt, die beispielsweise ein Bremszylinder(paar) einer hydraulischen (Fahrrad-) Felgenbremse bzw. einen Bremssattel einer hydraulischen (Fahrrad- oder Motorrad-)Scheibenbremse angeschlossen ist.

Es ist üblich, derartige hydraulische Bremsen vorbefüllt an den Erstausrüster bzw. Endkunden auszuliefern, damit der Hersteller das aufwendige Befüllen und Entlüften der hydraulischen Bremse mit seiner Erfahrung sicher und zuverlässig ausführen kann. Zur Montage an dem lenkergeführten Fahrzeug wird die Hydraulikleitung außen oder innen verlegt.

Wenn die Hydraulikleitung nicht außen am Fahrzeug, sondern innen, d.h. zumindest teilweise in dem Rahmen und/oder Lenker, verlegt werden soll, ist es erforderlich, die Gebervorrichtung und /oder die Nehmervorrichtung der hydraulischen Bremse von der Hydraulikleitung zu trennen und/oder die Hydraulikleitung zu trennen. Somit kann die Hydraulikleitung an den gewünschten Stellen innen verlegt werden.

Damit die hydraulische Bremse trotzdem vorbefüllt an den Kunden (z.B. Erstausrüster bzw. Werkstatt oder Endkunde) ausgeliefert werden kann, ist es aus der DE 10 2011 085 000 A1 bekannt, die hydraulische Bremse in zwei Teilen auszuliefern und die Trennstellen abzudichten, d.h. den Hydraulikanschluss der Gebervorrichtung, von der die Hydraulikleitung nach dem Befüllen der hydraulischen Bremse entfernt wurde, und die offene Seite der Hydraulikleitung abzudichten. Um die Dichtung zu entfernen, muss die montierte und wieder verbundene Bremse betätigt werden, so dass das Dichtungselement reißt und in der Leitung verbleibt.

Die bekannten Hydraulikanschlussvorrichtungen stellen eine Möglichkeit bereit, vorbefüllte Gebervorrichtungen getrennt von der Hydraulikleitung auszuliefern, so dass die Leitung innen verlegt werden kann und das System wieder zusammengesetzt werden kann. Es besteht aber der Nachteil, dass die Dichtung eventuell nicht vollständig entfernt wird und es daher zu Fehlern im Betrieb kommen kann, beispielsweise wenn Reste der gelösten Dichtungseinrichtung abreißen und die Betätigung stören.

In der EP 3 434 543 B1 wird vorgeschlagen, als Dichtungseinrichtung ein Rückschlagventil vorzusehen, um diese Probleme zu vermeiden.

Die DE 10 2016 000 240 A1 offenbart eine Gebervorrichtung mit einem Hydraulikanschluss, der für den Versand mit einer Kappe verschlossen werden kann. Dabei besteht der Nachteil, dass sich die Kappe beim Transport von dem Hydraulikanschluss lösen kann, so dass Schmutz in den Hydraulikanschluss eintreten kann.

Die DE 10 2013 100 141 A1 offenbart, an dem Hydraulikleitungsanschluss einer Gebervorrichtung eine Abziehlasche vorzusehen. Dabei besteht der Nachteil, dass die Abziehlasche in Form einer dünnen Metallfolie versehentlich beschädigt bzw. entfernt werden kann, so dass während des Transport und vor der Montage Hydrauliköl aus der Gebervorrichtung austreten bzw. Schmutz in die Gebervorrichtung eindringen kann.

Um Probleme beim Transport mit der Verschmutzung des Hydraulikanschlusses der Gebervorrichtung zu vermeiden, wird dabei in der EP 3 434 543 B1 vorgeschlagen, einen separaten Stopfen vorzusehen, der in das Gewinde des Hydraulikanschlusses der Gebervorrichtung eingedreht werden kann, um eine sichere Abdichtung des Hydraulikanschlusses zu gewährleisten. Die DE 10 2018 107 402 A1 offenbart eine Gebervorrichtung mit einem Hydraulikanschluss, in dem ein Stopfen vorgesehen ist. Damit der Stopfen zur Montage aus dem Hydraulikanschluss herausgezogen werden kann, ohne dass Hydrauliköl ausläuft, weist der Stopfen einen Kanal auf. Der Kanal ist mit einem Deckel verschlossen. Der Deckel wird von dem Stopfen abgelöst, damit der Kanal offen ist und der Stopfen ohne Auslaufen von Hydrauliköl aus den Hydraulikanschluss herausgezogen werden kann.

Diese bekannten Ausführung haben den Nachteil, dass zur Montage der Hydraulikleitung an der Gebervorrichtung der Stopfen erst aufwendig entfernt werden muss. In einem weiteren Schritt muss dann eine Abdeckeinrichtung auf der Hydraulikleitung angeordnet und diese an dem Hydraulikanschluss befestigt werden. Es besteht daher ein Bedarf an einer Gebervorrichtung für eine hydraulische Bremse, die vorbefüllt ist und gleichzeitig ohne Gefahr einer Verschmutzung des Hydraulikanschlusses transportiert und ausgeliefert werden kann, und anschließend einfach und sicher montiert werden kann.

Der Erfindung liegt daher die Aufgabe zugrunde, eine Gebervorrichtung für eine hydraulische Bremse anzugeben, die eine getrennte Auslieferung vorbefüllter hydraulischer Systeme für lenkergeführte Fahrzeuge ermöglichen, und gleichzeitig einen sicheren Transport, eine einfache Montage und einen sicheren Betrieb gewährleisten.

Die Aufgabe wird erfindungsgemäß durch eine Gebervorrichtung für eine hydraulische Bremse gemäß Anspruch 1 gelöst. Vorteilhafte Weiterbildungen der Erfindung finden sich in den Unteransprüchen.

Gemäß der Erfindung wird eine Gebervorrichtung für eine hydraulische Bremse lenkergeführter Fahrzeuge mit einem Druckraum, in dem bei Betätigung der Gebervorrichtung Druck aufgebaut wird, und mit einem Hydraulikanschluss, in dem eine Hydraulikleitungsanschlusseinrichtung angeordnet ist, angegeben, wobei die Hydraulikleitungsanschlusseinrichtung derart ausgebildet und angeordnet ist, dass eine Hydraulikleitung darin derart anordbar ist, dass der Hydraulikanschluss von dem Druckraum hydraulisch getrennt ist, wenn die Hydraulikleitung nicht in der Hydraulikleitungsanschlusseinrichtung angeordnet ist, und der Hydraulikanschluss mit dem Druckraum hydraulisch verbunden ist, wenn die Hydraulikleitung in der Hydraulikleitungsanschlusseinrichtung angeordnet ist, wobei um die Hydraulikleitungsanschlusseinrichtung eine Abdeckeinrichtung angeordnet ist, die eine Verschlusseinrichtung aufweist.

Die Ausführungen der Erfindung haben den Vorteil, dass die Verschlusseinrichtung dazu dienen kann, dass kein Schmutz an die Hydraulikleitungsanschlusseinrichtung gelangt, solange noch keine Hydraulikleitung an der Gebervorrichtung angebracht worden ist, d.h. beispielsweise in einem für den Transport zu dem Erstausstatter Zustand, in dem die Gebervorrichtung bereits mit Hydraulikflüssigkeit vorgefüllt und noch von der Hydraulikleitung getrennt ist. Zur Montage der Hydraulikleitung kann die Verschlusseinrichtung einfach von der Abdeckeinrichtung getrennt werden, beispielsweise durch ein einfaches Drehen um die Längsachse, d.h. eine Achse deren Verlauf der anzuordnenden Hydraulikleitung entspricht. Die Hydraulikleitung kann dann einfach in die Abdeckeinrichtung gesteckt und dort mittels einer Presspassung gesichert werden. Es ist nicht erforderlich, die Abdeckeinrichtung nach der Trennung der Verschlusseinrichtung von der Abdeckeinrichtung an der Gebervorrichtung anzuordnen.

Erfindungsgemäß kann die Abdeckvorrichtung mit der Verschlussvorrichtung an der Gebervorrichtung vormontiert sein. Die Verschlussvorrichtung kann zur Montage von der Abdeckeinrichtung getrennt werden.

Erfindungsgemäß kann die Abdeckeinrichtung eine Kunststoffabdeckung sein. Die Abdeckeinrichtung kann vorzugsweise derart angeordnet und ausgebildet sein, dass die Abdeckeinrichtung über die Hydraulikleitung geschoben werden kann und direkt im Bereich des Hydraulikleitungsanschlusses angeordnet ist. Das hat den Vorteil, dass die Abdeckeinrichtung die Hydraulikleitung und die Verbindung zwischen der Hydraulikleitung und dem Hydraulikanschluss der Gebereinrichtung versteift und ein ungewolltes Abknicken der Hydraulikleitung in diesem Bereich verhindern kann.

Die Ausführung der Erfindung hat den Vorteil, dass die Verschlusseinrichtung für die Montage der Hydraulikleitung an der Gebervorrichtung einfach von der Abdeckeinrichtung entfernt werden kann. Die Abdeckeinrichtung muss hingegen nicht von der Gebervorrichtung getrennt werden. Anschließend kann die Hydraulikleitung einfach durch die Abdeckeinrichtung in die Hydraulikleitungsanschlusseinrichtung gesteckt und somit daran befestigt werden. Nachdem Einstecken der Hydraulikleitung kommt die Klemmeinrichtung in Eingriff mit der Hydraulikleitung und bewirkt eine Presspassung zwischen der Hydraulikleitung und der Hydraulikleitungsanschlusseinrichtung.

Erfindungsgemäß kann die Abdeckeinrichtung eine Hülse sein, die derart angeordnet und ausgebildet ist, dass die Abdeckeinrichtung nach der Montage der Hydraulikleitung die Hydraulikleitung umschließt.

Erfindungsgemäß kann die Abdeckeinrichtung eine im Wesentlichen kegelstumpfförmige Aussenkontur aufweisen.

Erfindungsgemäß kann die Abdeckeinrichtung ein bezogen auf die Gebervorrichtung abgewandtes Ende und ein bezogen auf die Gebervorrichtung zugewandtes Ende aufweisen, zwischen denen sich ein Durchgang zur Anordnung und Aufnahme einer Hydraulikleitung erstreckt.

Erfindungsgemäß kann die Abdeckeinrichtung einen Durchgang zur Anordnung und Aufnahme einer Hydraulikleitung aufweisen, und die Verschlusseinrichtung kann derart angeordnet und ausgebildet sein, dass die Verschlusseinrichtung die Anordnung einer Hydraulikleitung in dem Durchgang der Abdeckeinrichtung verhindert.

Erfindungsgemäß kann der Durchgang der Abdeckeinrichtung im Bereich des bezogen auf die Gebervorrichtung abgewandten Endes einen Innendurchmesser aufweisen, der im Wesentlichen dem Außendurchmesser der darin anzuordnenden Hydraulikleitung entspricht.

Erfindungsgemäß kann dabei der Innendurchmesser des Durchgangs der Abdeckeinrichtung im Bereich des bezogen auf die Gebervorrichtung abgewandten Endes etwas kleiner als der Außendurchmesser darin anzuordnenden Hydraulikleitung sein.

Diese Ausführung hat den Vorteil, dass dort eine Presspassung entsteht, die vorzugsweise derart bemessen ist, dass die Abdeckeinrichtung durch die Haftreibung gegen unbeabsichtigtes Verschieben gesichert ist, aber eine gewollte Verschiebung noch möglich ist.

Erfindungsgemäß kann der Durchgang der Abdeckeinrichtung im Bereich des bezogen auf die Gebervorrichtung zugewandten Endes eine Aufnahme aufweisen.

Die Aufnahme kann zur Aufnahme des der Abdeckeinrichtung zugewandten Endes der Hydraulikleitungsanschlusseinrichtung dienen.

Erfindungsgemäß kann dabei die Aufnahme als Innenkontur des bezogen auf die Gebervorrichtung zugewandten Endes ausgebildet sein, wobei die Innenkontur der Außenkontur des in der Aufnahme anzuordnenden bzw. bei fertiger Montage angeordneten Endes der Hydraulikleitungsanschlusseinrichtung entspricht.

Erfindungsgemäß können dabei die Innenkontur und die Außenkontur in Umfangsrichtung asymmetrisch ausgebildet sind.

Diese Ausführung hat den Vorteil, dass ein Drehformschluss zwischen der Abdeckeinrichtung und Hydraulikleitungsanschlusseinrichtung ausgebildet werden kann bzw. dass die Abdeckeinrichtung gegen Drehung um ihre Längsachse, d.h. eine Achse entlang des Verlaufs der Hydraulikleitung, gesichert werden kann.

Erfindungsgemäß kann dabei die Verschlusseinrichtung als Kappe ausgebildet sein.

Erfindungsgemäß kann die Verschlusseinrichtung ein bezogen auf die Gebervorrichtung zugewandtes Ende aufweisen, an dem die Verschlusseinrichtung mit einer Verbindungseinrichtung mit der Abdeckeinrichtung verbunden ist.

Erfindungsgemäß kann die Verschlusseinrichtung ein bezogen auf die Gebervorrichtung abgewandtes Ende aufweisen, an dem ein Griffabschnitt vorgesehen bzw. ausgebildet ist.

Diese Ausführung hat den Vorteil, dass die Verschlusseinrichtung besonders einfach und definiert von der Abdeckeinrichtung getrennt werden kann, ohne dass eine zu große Gefahr einer zufälligen Trennung entsteht. Der Griffabschnitt kann dabei vorzugsweise derart angeordnet und ausgebildet sein, dass eine Drehkraft auf die Verschlusseinrichtung ausgeübt werden kann. Die Drehkraft kann dabei ein Drehmoment auf die Verbindungseinrichtung zwischen der Abdeckeinrichtung und der Verschlusseinrichtung ausüben. Ist dabei das Drehmoment hinreichend groß, wird die Verbindungseinrichtung zwischen der Abdeckeinrichtung und der Verschlusseinrichtung getrennt bzw. zerstört, so dass die Verschlusseinrichtung von der Abdeckeinrichtung getrennt wird und den Durchgang für die Aufnahme der Hydraulikleitung freigibt. Anschließend kann die Hydraulikleitung, die vorzugsweise vorher im Rahmen bzw. Lenker des lenkgeführten Fahrzeugs montiert wurde, an dem die Gebervorrichtung angeordnet werden soll, an dem Hydraulikanschluss der Gebervorrichtung angebracht werden, indem die Hydraulikleitung in den Durchgang und die Hydraulikleitungsanschlusseinrichtung eingeführt und dort mit der Klemmeinrichtung gesichert wird.

Erfindungsgemäß kann die Verbindungseinrichtung mehrere Stege aufweisen, mit denen das bezogen auf die Gebervorrichtung abgewandte Ende der Abdeckeinrichtung mit dem bezogen auf die Gebervorrichtung zugewandten Ende der Verschlusseinrichtung verbunden ist.

Erfindungsgemäß können dabei zwischen den mehreren Stegen Aussparungen vorgesehen sein.

Erfindungsgemäß können dabei die Aussparungen derart angeordnet und ausgebildet sein, dass die Hydraulikleitungsanschlusseinrichtung sicher vor Verschmutzung geschützt ist.

Erfindungsgemäß kann das bezogen auf die Gebervorrichtung zugewandte Ende der Verschlusseinrichtung das bezogen auf die Gebervorrichtung abgewandte Ende der Abdeckeinrichtung überlappen und/oder zwischen der Verschlusseinrichtung und der Abdeckeinrichtung eine Labyrinthdichtung vorgesehen sein.

Diese Ausführungen haben den Vorteil, dass Schmutz nicht so einfach zu der Hydraulikleitungsanschlusseinrichtung gelangen kann, weil etwaige Schmutzpartikel mehrere Richtungsänderungen auf dem Weg von außen zu der Hydraulikleitungsanschlusseinrichtung machen müssten. Zudem müssten die Schmutzpartikel die Aussparungen treffen und durch diese hindurchtreten.

Die Erfindung betrifft auch eine hydraulische Bremse bzw. hydraulische Scheibenbremse bzw. hydraulische Felgenbremse für lenkergeführte Fahrzeuge mit einer Gebervorrichtung gemäß einer der oben beschriebenen Ausführungen der Erfindung.

Die Erfindung wird im Folgenden anhand der in den Figuren gezeigten Ausführungsbeispiele beschrieben. Dabei werden folgende Bezugszeichen verwendet:
- 1: Gebervorrichtung
- 2: Bremshebel
- 3: Gebergehäuse
- 4: Ausgleichsbehälter
- 5: Druckraum
- 6: Hydraulikanschluss
- 7: Innengewinde
- 10: Hydraulikleitungsanschlusseinrichtung
- 11: Klemmeinrichtung
- 12: Aussengewinde
- 13: Ventileinrichtung
- 20: Abdeckeinrichtung
- 21: abgewandtes Ende (bezogen auf die Gebervorrichtung)
- 22: zugewandtes Ende (bezogen auf die Gebervorrichtung)
- 23: Durchgang
- 24: Aufnahme
- 30: Verschlusseinrichtung (Kappe)
- 31: zugewandtes Ende (bezogen auf die Gebervorrichtung)
- 32: abgewandtes Ende (bezogen auf die Gebervorrichtung)
- 33: Griffabschnitt
- 40: Verbindungseinrichtung
- 41: Steg
- 42: Aussparung
- 50: Hydraulikleitung

### Kurzbeschreibung der Figuren:

- Fig. 1: zeigt eine Schnittansicht durch eine Gebervorrichtung für eine hydraulische Bremse mit einer Abdeckeinrichtung und einer Verschlusseinrichtung gemäß einer Ausführung der Erfindung.
- Fig. 2: zeigt eine der Schnittansicht von Fig. 1 entsprechende Schnittansicht der Gebervorrichtung von Fig. 1, wobei die Verschlusseinrichtung von der Abdeckeinrichtung entfernt worden ist.
- Fig. 3: zeigt eine der Schnittansicht von Fig. 1 entsprechende Schnittansicht der Gebervorrichtung von Fig. 1, wobei eine Hydraulikleitung in dem Hydraulikanschluss angeordnet ist.
- Fig. 4: zeigt eine perspektivische Ansicht der Abdeckeinrichtung der Gebervorrichtung von Fig. 1, wobei die Verschlusseinrichtung von der Abdeckeinrichtung entfernt worden ist.
- Fig. 5: zeigt eine perspektivische Ansicht der Hydraulikleitungsanschlusseinrichtung der Gebervorrichtung von Fig. 1.
- Fig. 6: zeigt eine Schnittansicht durch die Abdeckeinrichtung mit der Verschlusseinrichtung der Gebervorrichtung von Fig. 1 in der Schnittebene von Fig. 1.
- Fig. 7: zeigt eine Schnittansicht durch die Abdeckeinrichtung mit der Verschlusseinrichtung der Gebervorrichtung von Fig. 1 in einer zu der Schnittebene von Fig. 1 senkrechten Schnittebene.
- Fig. 8: zeigt eine der Fig. 6 entsprechende Schnittansicht durch die Abdeckeinrichtung von Fig. 6, wobei die Verschlusseinrichtung von der Abdeckeinrichtung getrennt wurde.
- Fig. 9: zeigt eine der Fig. 7 entsprechende Schnittansicht durch die Abdeckeinrichtung von Fig. 6, wobei die Verschlusseinrichtung von der Abdeckeinrichtung getrennt wurde.
- Fig. 10: zeigt eine perspektivische Ansicht der Abdeckeinrichtung mit der Verschlusseinrichtung und der Klemmeinrichtung der Gebervorrichtung von Fig. 1 aus Sicht des Hydraulikanschlusses der Gebervorrichtung von Fig. 1.
- Fig. 11: zeigt eine perspektivische Detailansicht der Gebervorrichtung von Fig. 1, , wobei die Verschlusseinrichtung von der Abdeckeinrichtung entfernt worden ist, und wobei die Abdeckeinrichtung etwas entlang der nicht dargestellten Hydraulikleitung von dem Hydraulikanschluss weg geschoben dargestellt ist, so dass die Hydraulikanschlusseinrichtung zumindest teilweise freigelegt ist.
- Fig. 12: zeigt eine Ansicht der Abdeckeinrichtung mit der Verschlusseinrichtung der Gebervorrichtung von Fig. 1 aus Sicht des Hydraulikanschlusses der Gebervorrichtung von Fig. 1.
- Fig. 13: zeigt eine der Ansicht von Fig. 12 entsprechende Ansicht einer Abdeckeinrichtung mit einer Verschlusseinrichtung für eine Gebervorrichtung gemäß einer weiteren Ausführung der Erfindung.
- Fig. 14: zeigt eine der Ansicht von Fig. 12 entsprechende Ansicht einer Abdeckeinrichtung mit einer Verschlusseinrichtung für eine Gebervorrichtung gemäß einer weiteren Ausführung der Erfindung.
- Fig. 15: zeigt eine der Ansicht von Fig. 12 entsprechende Ansicht einer Abdeckeinrichtung mit einer Verschlusseinrichtung für eine Gebervorrichtung gemäß einer weiteren Ausführung der Erfindung.
- Fig. 16: zeigt eine der Ansicht von Fig. 12 entsprechende Ansicht einer Abdeckeinrichtung mit einer Verschlusseinrichtung für eine Gebervorrichtung gemäß einer weiteren Ausführung der Erfindung.
- Fig. 17: zeigt eine der Ansicht von Fig. 12 entsprechende Ansicht einer Abdeckeinrichtung mit einer Verschlusseinrichtung für eine Gebervorrichtung gemäß einer weiteren Ausführung der Erfindung.

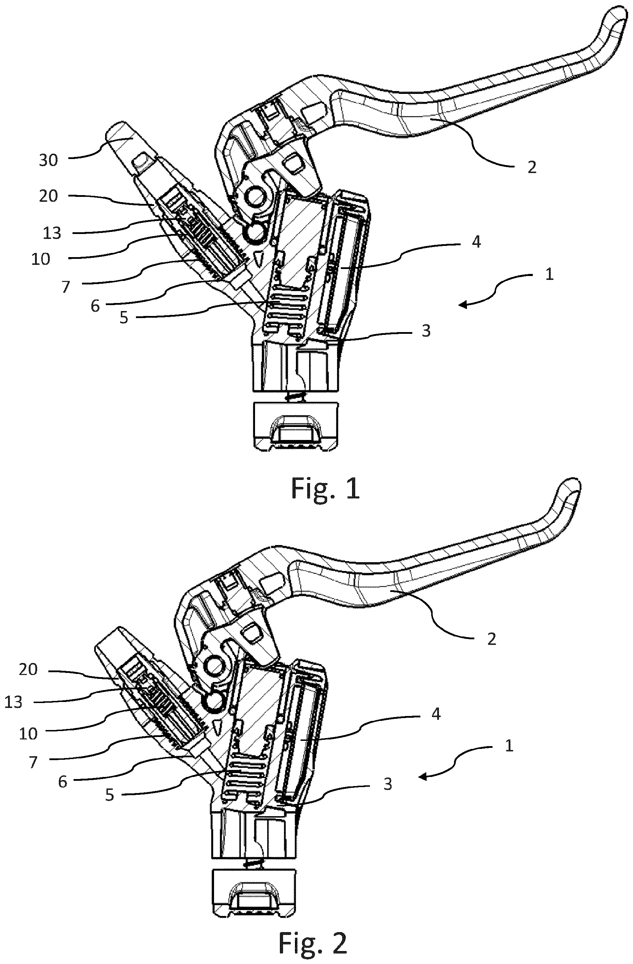

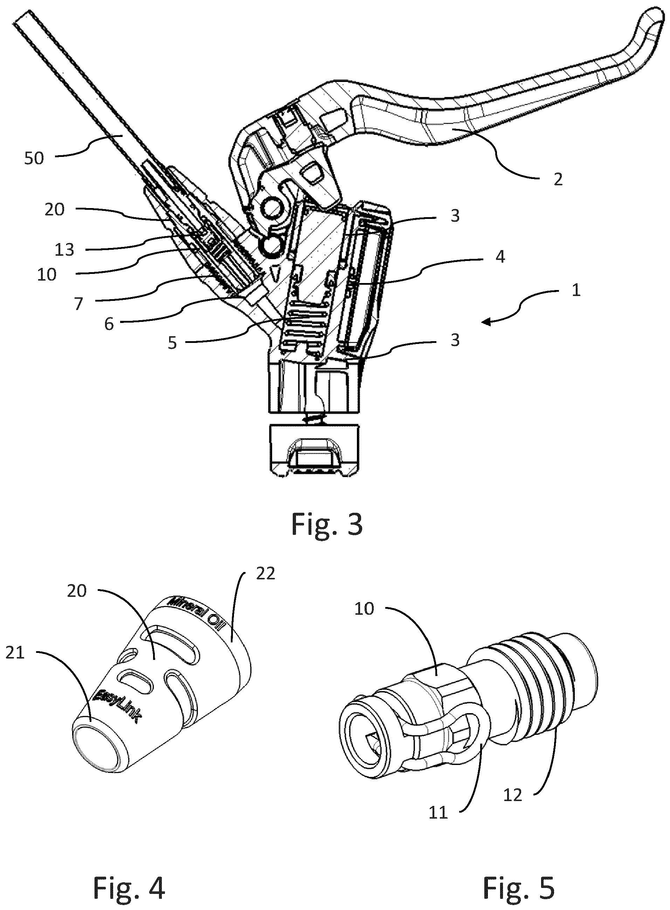

Fig. 1 zeigt die Gebervorrichtung 1 für eine hydraulische Bremse mit einer Abdeckeinrichtung 20 und einer Verschlusseinrichtung 30 gemäß einer Ausführung der Erfindung. Die Gebervorrichtung 1 umfasst ein Gebergehäuse 3, in dem ein Kolben in Richtung eines Druckraums 5 durch Betätigung eines Bremshebels 2 verschiebbar angeordnet ist, um zur Betätigung der hydraulischen Bremse Druck aufzubauen. Erfindungsgemäß kann bei einem offenen System ein Ausgleichsbehälter 4 vorgesehen sein, wie es üblicherweise bei hydraulischen Scheibenbremssystemen der Fall ist. Es ist aber erfindungsgemäß auch möglich, ein geschlossenes System vorzusehen, wie es üblicherweise bei hydraulischen Felgenbremsen der Fall ist. An der Gebervorrichtung 1 ist ein Hydraulikanschluss 6 zum Anschluss einer Hydraulikleitung 50, wie in Fig. 3 gezeigt, vorgesehen. In Fig. 1 ist die Hydraulikleitung 50 noch nicht montiert. In Fig. 1 ist die Gebervorrichtung für die Montage an einem Lenker eines lenkergeführten Fahrzeugs in einem vorbefüllten Zustand dargestellt.

In dem Hydraulikanschluss 6 ist ein Innengewinde 7 vorgesehen, in dem auf dem Fachmann bekannte Weise eine Hydraulikleitungsanschlusseinrichtung 10 eingeschraubt werden kann, die ein entsprechendes Außengewinde 12 aufweist, das mit dem Innengewinde 7 zusammenwirkt.

An der Hydraulikleitungsanschlusseinrichtung 10 ist eine Klemmeinrichtung 11 vorgesehen, mit der eine in der Hydraulikleitungsanschlusseinrichtung 10 angeordnete Hydraulikleitung 10 geklemmt und an der Gebervorrichtung 1 befestigt ist.

In der Hydraulikleitungsanschlusseinrichtung 10 ist eine Ventileinrichtung 13 vorgesehen, die derart ausgebildet und angeordnet ist, dass die Hydraulikleitung 50 darin derart anordbar ist, dass der Hydraulikanschluss 6 von dem Druckraum 5 hydraulisch getrennt ist, wenn die Hydraulikleitung 50 nicht in der Hydraulikleitungsanschlusseinrichtung 10 angeordnet ist, und der Hydraulikanschluss 6 mit dem Druckraum 5 hydraulisch verbunden ist, wenn die Hydraulikleitung 5 in der Hydraulikleitungsanschlusseinrichtung 10 angeordnet ist.

Die Abdeckeinrichtung 20 weist ein bezogen auf die Gebervorrichtung 1 abgewandtes Ende 21 und ein bezogen auf die Gebervorrichtung zugewandtes Ende 22 auf, zwischen denen sich ein Durchgang 23 zur Aufnahme einer Hydraulikleitung 50 erstreckt.

Im Bereich des bezogen auf die Gebervorrichtung 1 abgewandten Endes 21 weist der Durchgang 23 einen Innendurchmesser auf, der im Wesentlichen dem Außendurchmesser der Hydraulikleitung 50 entspricht. Vorzugsweise ist der Innendurchmesser des Durchgangs 23 im Bereich des bezogen auf die Gebervorrichtung 1 abgewandten Endes 21 etwas kleiner als der Außendurchmesser der Hydraulikleitung, so dass dort eine Presspassung entsteht, die vorzugsweise derart bemessen ist, dass die Abdeckeinrichtung durch die Haftreibung gegen unbeabsichtigtes Verschieben gesichert ist, aber eine gewollte Verschiebung noch möglich ist.

Im Bereich des bezogen auf die Gebervorrichtung 1 zugewandten Endes 22 weist der Durchgang 23 der Abdeckeinrichtung 20 eine Aufnahme 24 auf. Die Aufnahme 24 dient zur Aufnahme des der Abdeckeinrichtung 20 zugewandten Endes der Hydraulikleitungsanschlusseinrichtung 10. Die Aufnahme 24 ist als Innenkontur des bezogen auf die Gebervorrichtung 1 zugewandten Endes 22 ausgebildet, wobei die Innenkontur der Außenkontur des in der Aufnahme anzuordnenden bzw. bei fertiger Montage angeordneten Endes der der Hydraulikleitungsanschlusseinrichtung 10 entspricht. Vorzugsweise sind die Innenkontur und die Außenkontur in Umfangsrichtung asymmetrisch ausgebildet, so dass ein Drehformschluss zwischen der Abdeckeinrichtung 20 und Hydraulikleitungsanschlusseinrichtung 10 ausgebildet ist, d.h. mit anderen Worten, dass sich die Abdeckeinrichtung 20 gegen Drehung um ihre Längsachse, d.h. eine Achse entlang des Verlaufs der Hydraulikleitung 50, gesichert ist.

An der Abdeckeinrichtung 20 ist eine Verschlusseinrichtung 30 angeordnet. Bei der dargestellten Ausführung ist die Verschlusseinrichtung 30 als Kappe ausgebildet. Die Verschlusseinrichtung 30 dient dazu, dass kein Schmutz an die Hydraulikleitungsanschlusseinrichtung 10 gelangt, solange noch keine Hydraulikleitung 50 an der Gebervorrichtung 1 angebracht worden ist, d.h. beispielsweise in einem für den Transport zu dem Erstausstatter Zustand, in dem die Gebervorrichtung 1 bereits mit Hydraulikflüssigkeit vorgefüllt und noch von der Hydraulikleitung 50 getrennt ist, wie in Fig. 1 dargestellt.

Die Verschlusseinrichtung 30 weist ein bezogen auf die Gebervorrichtung 1 zugewandtes Ende 31 auf, an dem die Verschlusseinrichtung mit einer Verbindungseinrichtung 40 mit der Abdeckeinrichtung 20 verbunden ist.

Die Verschlusseinrichtung 30 weist ein bezogen auf die Gebervorrichtung 1 abgewandtes Ende 32 auf, an dem ein Griffabschnitt 33 vorgesehen ist. Der Griffabschnitt 33 ist derart angeordnet und ausgebildet, dass eine Drehkraft auf die Verschlusseinrichtung ausgeübt werden kann. Die Drehkraft übt ein Drehmoment auf die Verbindungseinrichtung 40 zwischen der Abdeckeinrichtung 20 und der Verschlusseinrichtung 30 aus. Ist das Drehmoment hinreichend groß, wird die Verbindungseinrichtung 40 zwischen der Abdeckeinrichtung 20 und der Verschlusseinrichtung 30 getrennt bzw. zerstört, so dass die Verschlusseinrichtung 30 von der Abdeckeinrichtung 20 getrennt wird und den Durchgang für die Aufnahme der Hydraulikleitung freigibt. Diese Situation ist in Fig. 2 dargestellt.

Jetzt kann die Hydraulikleitung 50, die vorzugsweise vorher im Rahmen bzw. Lenker des lenkgeführten Fahrzeugs montiert wurde, an dem die Gebervorrichtung 1 angeordnet werden soll, an dem Hydraulikanschluss 6 der Gebervorrichtung 1 angebracht werden, indem die Hydraulikleitung 50, wie in Fig. 3 gezeigt, in den Durchgang 24 und die Hydraulikleitungsanschlusseinrichtung 10 eingeführt und dort mit der Klemmeinrichtung 11 gesichert wird.

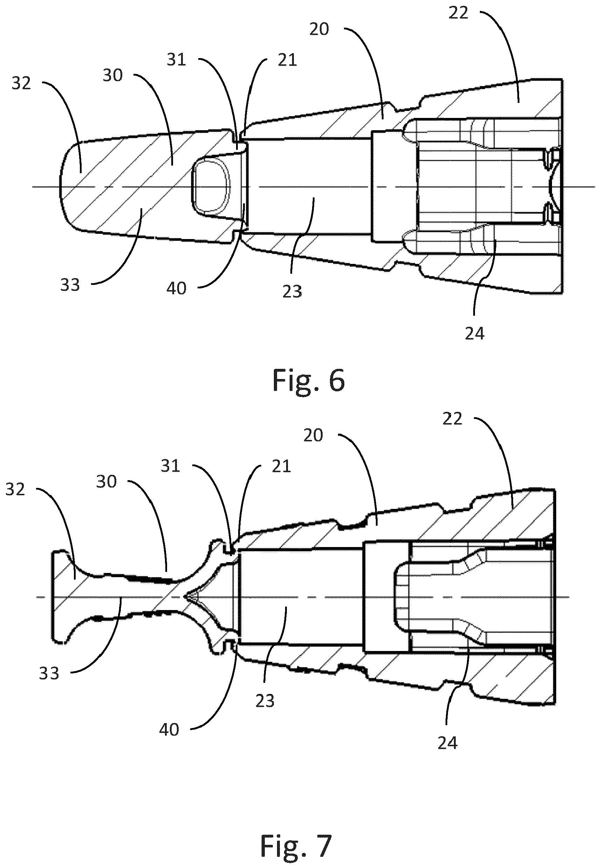

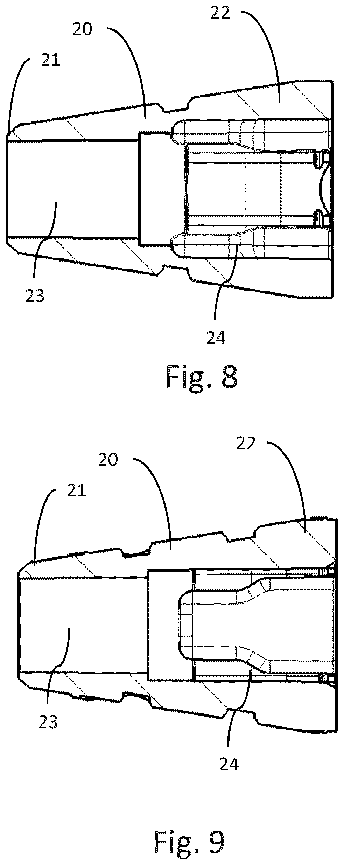

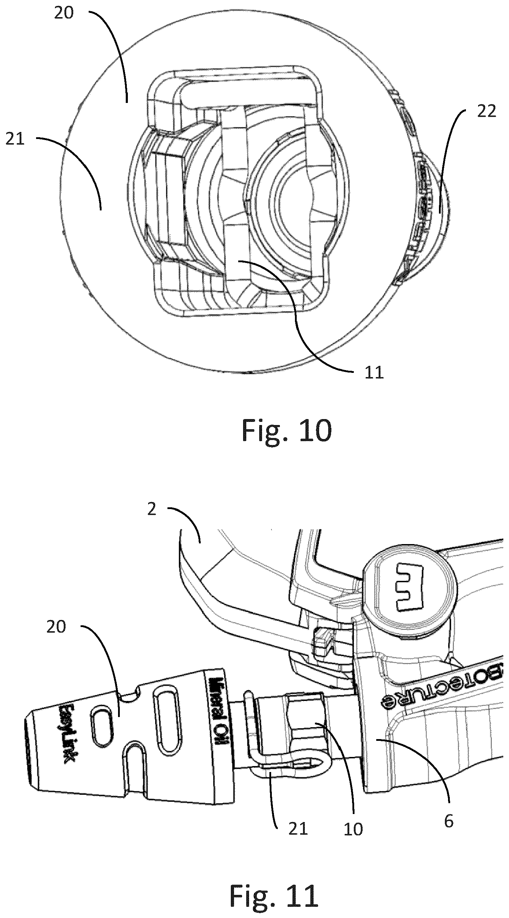

Die Verbindungseinrichtung 40 weist bei der in den Figuren 1 bis 12 dargestellten Ausführung der Erfindung 6 Stege 41 auf, mit denen das bezogen auf die Gebervorrichtung 1 abgewandte Ende 21 der Abdeckeinrichtung 20 mit dem bezogen auf die Gebervorrichtung 1 zugewandten Ende 31 der Verschlusseinrichtung 30 verbunden ist. Zwischen den 6 Stegen 41 sind entsprechend 6 Aussparungen 42 vorgesehen. Die Aussparungen 42 sind so schmal, dass die Hydraulikleitungsanschlusseinrichtung 10 sicher vor Verschmutzung geschützt ist, selbst wenn die Hydraulikleitung 50 noch nicht montiert ist. Als zusätzlichen Schutz ist vorzugsweise wie bei der in den Figuren 1 bis 12 dargestellten Ausführung vorgesehen, dass das bezogen auf die Gebervorrichtung 1 zugewandten Ende 31 der Verschlusseinrichtung 30 das bezogen auf die Gebervorrichtung 1 abgewandte Ende 21 der Abdeckeinrichtung 20 überlappt, und zwar derart, dass eine Art Labyrinthdichtung zwischen der Verschlusseinrichtung 30 und der Abdeckeinrichtung 20 vorgesehen ist. Schmutz kann daher nicht so einfach zu der Hydraulikleitungsanschlusseinrichtung 10, weil etwaige Schmutzpartikel mehrere Richtungsänderungen auf dem Weg von außen zu der Hydraulikleitungsanschlusseinrichtung 10 machen müssten. Zudem müssten die Schmutzpartikel die Aussparungen treffen und durch diese hindurchtreten.

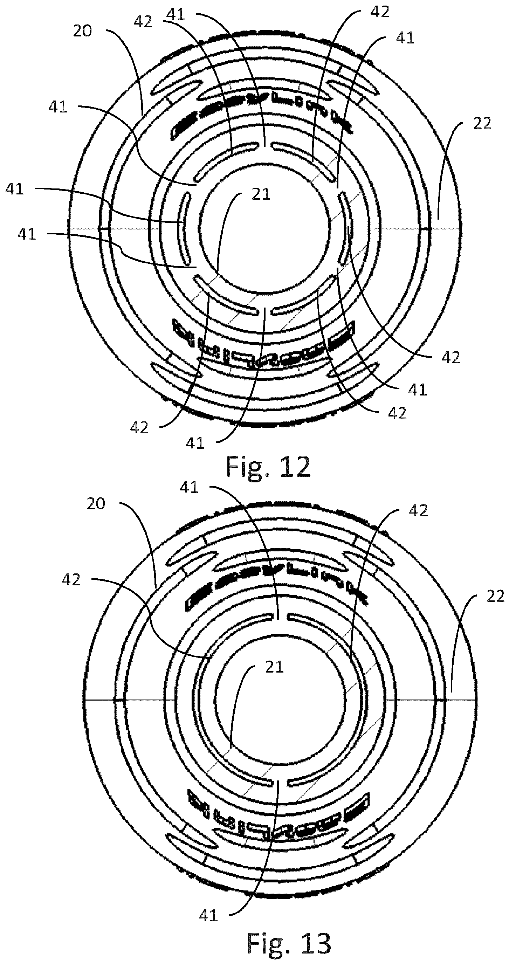

Die Figuren 13 bis 17 zeigen Varianten der in den Figuren 1 bis 12 dargestellten Ausführung. Es wird daher betreffend die Ausführungen der Figuren 13 bis 17 auf die Beschreibung des Ausführungsbeispiels der Figuren 1 bis 12 verwiesen und nur auf die Unterschiede eingegangen.

Bei der Ausführung der Fig. 13 weist die Verbindungseinrichtung 40 zwei Stege 41 und zwei Aussparungen 42 auf.

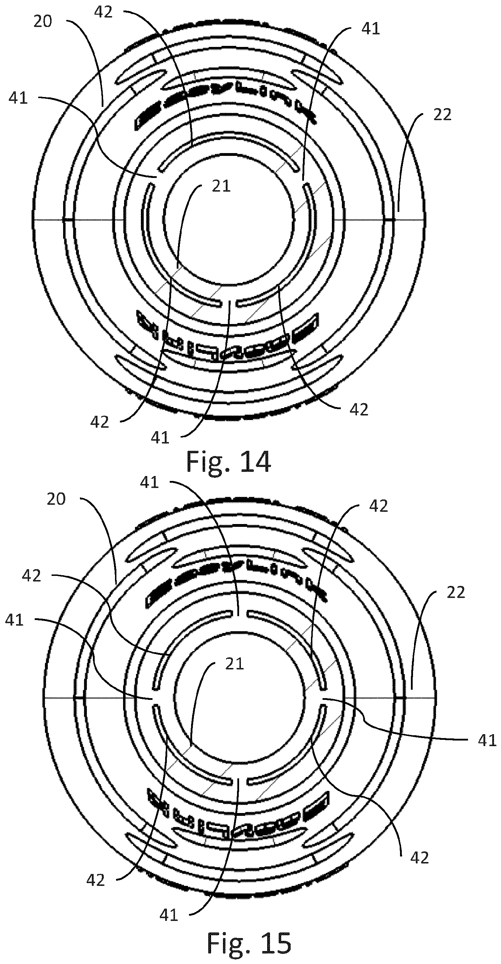

Bei der Ausführung der Fig. 14 weist die Verbindungseinrichtung 40 drei Stege 41 und drei Aussparungen 42 auf.

Bei der Ausführung der Fig. 15 weist die Verbindungseinrichtung 40 vier Stege 41 und vier Aussparungen 42 auf.

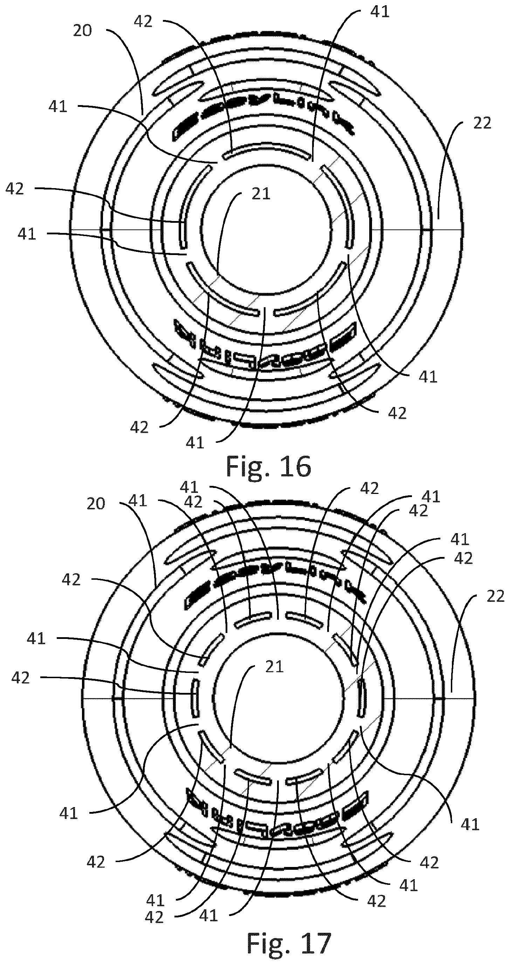

Bei der Ausführung der Fig. 16 weist die Verbindungseinrichtung 40 fünf Stege 41 und fünf Aussparungen 42 auf.

Bei der Ausführung der Fig. 17 weist die Verbindungseinrichtung 40 zehn Stege 41 und zehn Aussparungen 42 auf.

Es ist erfindungsgemäß auch möglich, andere Anzahlen von Stegen und Aussparungen vorzusehen.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Gebervorrichtung (1) für eine hydraulische Bremse lenkergeführter Fahrzeuge mit einem Druckraum (5), in dem bei Betätigung der Gebervorrichtung Druck aufgebaut wird, und mit einem Hydraulikanschluss (6), in dem eine Hydraulikleitungsanschlusseinrichtung (10) angeordnet ist, wobei die Hydraulikleitungsanschlusseinrichtung (10) derart ausgebildet und angeordnet ist, dass eine Hydraulikleitung (50) darin derart anordbar ist, dass der Hydraulikanschluss (6) von dem Druckraum (5) hydraulisch getrennt ist, wenn die Hydraulikleitung (50) nicht in der Hydraulikleitungsanschlusseinrichtung (10) angeordnet ist, und der Hydraulikanschluss (6) mit dem Druckraum (5) hydraulisch verbunden ist, wenn die Hydraulikleitung (50) in der Hydraulikleitungsanschlusseinrichtung (10) angeordnet ist,
**dadurch gekennzeichnet, dass** um die Hydraulikleitungsanschlusseinrichtung (10) eine Abdeckeinrichtung (20) angeordnet ist, die eine Verschlusseinrichtung (30) aufweist.

2. Gebervorrichtung (1) nach Anspruch 1, **dadurch gekennzeichnet, dass** die Abdeckeinrichtung (20) ein bezogen auf die Gebervorrichtung (1) abgewandtes Ende (21) und ein bezogen auf die Gebervorrichtung (1) zugewandtes Ende (22) auf, zwischen denen sich ein Durchgang (23) zur Anordnung und Aufnahme einer Hydraulikleitung (50) erstreckt.

3. Gebervorrichtung (1) nach einem der vorhergehenden Ansprüche, **dadurch gekennzeichnet, dass** die Abdeckeinrichtung (20) einen Durchgang (23) zur Anordnung und Aufnahme einer Hydraulikleitung (50) aufweist, und die Verschlusseinrichtung (30) derart angeordnet und ausgebildet ist, dass die Verschlusseinrichtung (30) die Anordnung einer Hydraulikleitung (50) in dem Durchgang (23) der Abdeckeinrichtung (20) verhindert.

4. Gebervorrichtung (1) nach einem der Ansprüche 2 bis 3, **dadurch gekennzeichnet, dass** der Durchgang (23) der Abdeckeinrichtung (20) im Bereich des bezogen auf die Gebervorrichtung (1) abgewandten Endes (21) einen Innendurchmesser aufweist, der im Wesentlichen dem Außendurchmesser der darin anzuordnenden Hydraulikleitung (50) entspricht.

5. Gebervorrichtung (1) nach Anspruch 4, **dadurch gekennzeichnet, dass** der Innendurchmesser des Durchgangs (23) der Abdeckeinrichtung (20) im Bereich des bezogen auf die Gebervorrichtung (1) abgewandten Endes (21) etwas kleiner als der Außendurchmesser darin anzuordnenden Hydraulikleitung (50) ist.

6. Gebervorrichtung (1) nach einem der vorhergehenden Ansprüche, **dadurch gekennzeichnet, dass** der Durchgang (23) der Abdeckeinrichtung (20) im Bereich des bezogen auf die Gebervorrichtung (1) zugewandten Endes (22) eine Aufnahme (24) aufweist.

7. Gebervorrichtung (1) nach Anspruch 6, **dadurch gekennzeichnet, dass** die Aufnahme (24) als Innenkontur des bezogen auf die Gebervorrichtung (1) zugewandten Endes (22) ausgebildet ist, wobei die Innenkontur der Außenkontur des in der Aufnahme anzuordnenden bzw. bei fertiger Montage angeordneten Endes der Hydraulikleitungsanschlusseinrichtung (10) entspricht.

8. Gebervorrichtung (1) nach Anspruch 7, **dadurch gekennzeichnet, dass** die Innenkontur und die Außenkontur in Umfangsrichtung asymmetrisch ausgebildet sind.

9. Gebervorrichtung (1) nach einem der vorhergehenden Ansprüche, **dadurch gekennzeichnet, dass** die Verschlusseinrichtung (30) als Kappe ausgebildet ist.

10. Gebervorrichtung (1) nach einem der vorhergehenden Ansprüche, **dadurch gekennzeichnet, dass** die Verschlusseinrichtung (30) ein bezogen auf die Gebervorrichtung (1) zugewandtes Ende (31) aufweist, an dem die Verschlusseinrichtung (30) mit einer Verbindungseinrichtung (40) mit der Abdeckeinrichtung (20) verbunden ist.

11. Gebervorrichtung (1) nach einem der vorhergehenden Ansprüche, **dadurch gekennzeichnet, dass** die Verschlusseinrichtung (30) ein bezogen auf die Gebervorrichtung (1) abgewandtes Ende (32) aufweist, an dem ein Griffabschnitt (33) vorgesehen ist.

12. Gebervorrichtung (1) nach einem der vorhergehenden Ansprüche, **dadurch gekennzeichnet, dass** die Verbindungseinrichtung (40) mehrere Stege (41) aufweist, mit denen das bezogen auf die Gebervorrichtung (1) abgewandte Ende (21) der Abdeckeinrichtung (20) mit dem bezogen auf die Gebervorrichtung (1) zugewandten Ende (31) der Verschlusseinrichtung (30) verbunden ist.

13. Gebervorrichtung (1) nach Anspruch 12, **dadurch gekennzeichnet, dass** zwischen den mehreren Stegen (41) Aussparungen (42) vorgesehen sind.

14. Gebervorrichtung (1) nach Anspruch 13, **dadurch gekennzeichnet, dass** die Aussparungen (42) derart angeordnet und ausgebildet sind, dass die Hydraulikleitungsanschlusseinrichtung (10) sicher vor Verschmutzung geschützt ist.

15. Gebervorrichtung (1) nach einem der vorhergehenden Ansprüche, **dadurch gekennzeichnet, dass** das bezogen auf die Gebervorrichtung (1) zugewandten Ende (31) der Verschlusseinrichtung (30) das bezogen auf die Gebervorrichtung (1) abgewandte Ende (21) der Abdeckeinrichtung (20) überlappt und/oder dass zwischen der Verschlusseinrichtung (30) und der Abdeckeinrichtung (20) eine Labyrinthdichtung vorgesehen ist.
